# EUROPÄISCHE PATENTSCHRIFT

(11) **EP 0 816 806 B1**
(45) Veröffentlichungstag und Bekanntmachung des Hinweises auf die Patenterteilung: **30.10.2002**
(21) Anmeldenummer: 97106440.7
(22) Anmeldetag: 18.04.1997
(51) Int. Cl.: G01D 21/02, G01P 3/80, B65H 63/08

(54) **Verfahren und Vorrichtung zum Bestimmen des Durchmessers einer Kreuzspule**
Method and apparatus for determining the diameter of a wound bobbin
Méthode et dispositif pour déterminer le diamètre d'une bobine

(30) Priorität: 26.06.1996 DE 19625512
(43) Veröffentlichungstag der Anmeldung: 07.01.1998
(73) Patentinhaber: W. SCHLAFHORST AG & CO., 41061 Mönchengladbach (DE)
(72) Erfinder: Hermanns, Ferdinand-Josef, 41812 Erkelenz (DE)
(74) Vertreter: Hamann, Arndt, Dipl.-Ing.

(56) Entgegenhaltungen:
- DE-A- 3 810 365
- DE-A- 4 225 842
- US-A- 4 494 702

## Beschreibung

Die Erfindung betrifft ein Verfahren zum Bestimmen des Durchmessers einer mittels einer Friktionswalze angetriebenen Kreuzspule während ihrer Herstellung, wobei die Winkelgeschwindigkeit der Kreuzspule mittels eines einem mit der Kreuzspule mitrotierenden Bauteil zugeordneten Gebers erfaßt und ausgewertet wird.

Bei der Herstellung von Kreuzspulen mittels Spulvorrichtungen von Textilmaschinen, insbesondere Kreuzspulen in wilder Wicklung, wird kontinuierlich auf eine zunächst leere Spulenhülse ein Faden aufgewickelt, so daß die Kreuzspule allmählich anwächst, bis sie einen vorgegebenen Durchmesser erreicht. Der Fadenauftrag pro Umdrehung der Kreuzspule ist im Vergleich zum Durchmesser der Kreuzspule äußerst gering. Der Durchmesser oder der Radius der Kreuzspule ist eine wesentliche Kenngröße, die einerseits dazu ausgenutzt werden kann, den Spulvorgang bei Erreichen eines bestimmten, vorgegebenen Durchmessers zu beenden, und auch während des Herstellens Eingriffe in den Spulvorgang vorzunehmen, um eine Qualitätsspule, beispielsweise mit möglichst konstanter Wickeldichte, zu erhalten.

Es ist bekannt (DE 38 10 365 A1), den Durchmesser oder den Radius einer Kreuzspule während des Herstellens auf der Grundlage einer Division der Periodendauer der Kreuzspule durch die Periodendauer der Friktionswalze zu ermitteln. Wegen des äußerst geringen Zuwachses des Durchmessers der Kreuzspule während einer Umdrehung werden noch zusätzliche Rechenoperationen durchgeführt, um ein aussagekräftiges Ergebnis zu erhalten. Die Ermittlung des Durchmessers oder des Radius der Kreuzspule unter Zuhilfenahme der Division der Spulenperiodendauer durch die Periodendauer der Friktionswalze setzt voraus, daß nur Messungen in einem schlupflosen Zustand durchgeführt werden, nämlich dann, wenn die Umfangsgeschwindigkeit der Friktionswalze und der Spule gleich sind. Bei modernen Spulmaschinen werden sogenannte Bildstörverfahren angewandt, um das Wickeln von Bildern zu verhindern. Hierzu wird nach vorgegebenen Kriterien ein Schlupf zwischen der Spule und der Friktionswalze erzeugt. Je stärker eine Bildauflösung in Bildzonen erfolgen soll, desto kürzer sind die Zeitspannen, in denen ein Gleichlauf zwischen Friktionswalze und Kreuzspule vorhanden ist, d.h. ein schlupfloser Zustand. Dies führt dazu, daß dann die Durchmesserbestimmung nach dem bekannten Verfahren problematisch wird.

Der Erfindung liegt die Aufgabe zugrunde, ein Verfahren der eingangs genannten Art zu schaffen, das ebenfalls eine Bestimmung des Durchmessers (oder des Radius) einer Kreuzspule während ihrer Herstellung ermöglicht, ohne daß hierfür ein schlupfloser Zustand zwischen Friktionswalze und Kreuzspule Voraussetzung ist.

Diese Aufgabe wird dadurch gelöst, daß der Durchmesser der Kreuzspule mittels Division der Umfangsgeschwindigkeit der Oberfläche der Kreuzspule durch die Winkelgeschwindigkeit der Kreuzspule errechnet wird, und daß die Umfangsgeschwindigkeit aus Sensorsignalen von zwei in Umfangsrichtung der Kreuzspule in festem Abstand aufeinanderfolgenden, Oberflächenmerkmale der Kreuzspule erfassenden Sensoren mit einem Laufzeitkorrelationsverfahren errechnet wird.

Das erfindungsgemäße Verfahren, das eine bekannte mathematische Formel ausnutzt, nämlich daß der Radius gleich der Umfangsgeschwindigkeit geteilt durch die Winkelgeschwindigkeit ist, erlaubt eine Bestimmung des Durchmessers (oder des Radius) der Spule, ohne daß für die Rechenoperation ein Gleichlauf zwischen Friktionswalze und Kreuzspule vorausgesetzt wird.

Laufzeitkorrelationsverfahren sind bekannt (Regelungstechnische Praxis, Jahrgang 1982, S. 73 bis 82 oder DE-42 25 842 A1). Das Verfahren beruht auf der Laufzeitmessung aus statistisch schwankenden Signalen, die von zwei in festem und damit bekanntem Abstand angeordneten Sensoren gebildet werden.

In weiterer Ausgestaltung der Erfindung wird die Aufgabe mittels einer Vorrichtung dadurch gelöst, daß dem Umfang der Kreuzspule zwei in festem Abstand in Umfangsrichtung aufeinanderfolgende, Oberflächenmerkmale der Kreuzspule erfassende Sensoren zugeordnet sind, und daß die Auswerteeinrichtung einen aus den Sensorsignalen Laufzeiten bildenden Korrelator, ein aus dem festen Abstand der Sensoren und den Laufzeiten durch Division die Umfangsgeschwindigkeiten der Kreuzspule bildendes Divisionsglied und ein durch Division der Umfangsgeschwindigkeiten und der Winkelgeschwindigkeiten der Kreuzspule den Durchmesser errechnendes Divisionsglied enthält.

In weiterer Ausgestaltung der Erfindung wird vorgesehen, daß die beiden Sensoren in der Nachbarschaft der Auflagestelle angeordnet sind, an der die Kreuzspule auf der Friktionswalze aufliegt. Dies ist ein Bereich, in welchem der Abstand der Oberfläche der Kreuzspule zu den beiden Sensoren sich ab einem bestimmten Durchmesserwert nicht mehr wesentlich ändert. Zu diesem Zweck ist es besonders vorteilhaft, wenn die Sensoren auf der einem Spulrahmen abgewandten Seite der Auflagestelle angeordnet sind. Diese Seite ist wegen der geringen Änderung des Abstandes zu der Oberfläche der anwachsenden Spule besonders vorteilhaft.

Weitere Vorteile und Merkmale der Erfindung ergeben sich aus der nachfolgenden Beschreibung der in den Zeichnungen dargestellten Ausführunmgsformen.

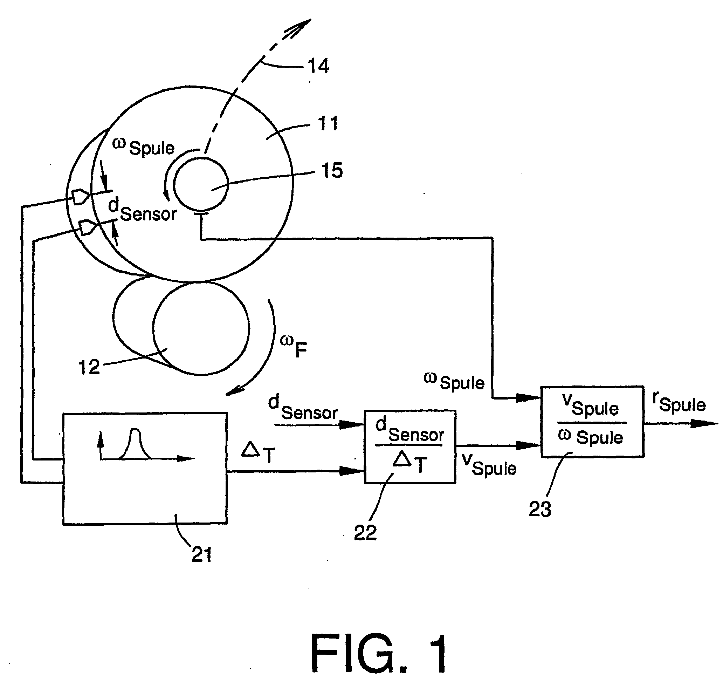

- Fig. 1: zeigt in schematischer Darstellung eine erfindungsgemäße Meß- und Auswerteeinrichtung zum Erfassen des Durchmessers einer Kreuzspule während der Herstellung und
- Fig. 2: in ebenfalls schematischer Darstellung eine Friktionswalze und eine Kreuzspule, deren Durchmesser aufgrund eines Garnauftrages oder Fadenauftrages anwächst.

Bei einer Spulvorrichtung einer Textilmaschine wird ein Faden oder ein Garn auf eine zunächst leere Spulenhülse (10) aufgewickelt, bis eine Kreuzspule (11) mit einem vorgegebenen Durchmesser hergestellt ist. Die zunächst leere Spulenhülse (10) und danach die in ihrem Durchmesser anwachsende Kreuzspule (11) liegt auf einer Friktionswalze (12) auf, die in nicht dargestellter Weise mit einem Antrieb versehen ist und die die Kreuzspule (11) antreibt. Die Friktionswalze ist beispielsweise als eine sogenannte Nutenwalze ausgebildet, die mit einer ein- oder mehrgängigen umlaufenden Nut versehen ist, die für eine Querverlegung des Fadens auf der Spulenhülse (10) und der Kreuzspule (11) sorgt und somit als Changiereinrichtung dient.

Die Spulenhülse (10) wird mittels eines Spulenrahmens (13) gehalten, der um eine zur Achse der Hülse (10) parallele Achse schwenkbar ist, so daß die Hülse (10) mit anwachsendem Durchmesser der Kreuzspule (11) sich auf einer Kreisbahn (14) zu der Schwenkachse des Spulenrahmens (13) bewegt.

Der Spulenrahmen (13) ist mit drehbar gelagerten Spulentellern versehen, die in die Hülse (10) eingreifen und mit dieser rotieren. Diesen Spulentellern ist ein Drehwinkelgeber (15) zugeordnet, der ein der Winkelgeschwindigkeit (ω_{Spule}) der Kreuzspule (11) entsprechendes Signal abgibt.

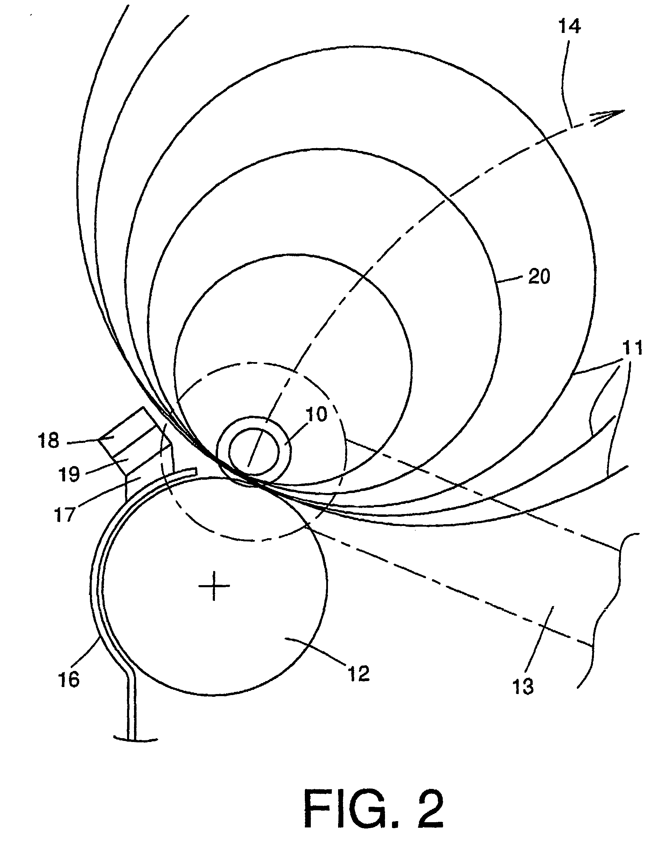

Auf der dem Spulenrahmen (13) abgewandten Seite, auf der der aufzuspulende Faden zuläuft, ist die Friktionswalze (12) mit einem Abweisblech (16) teilweise abgedeckt. An diesem Abweisblech (16) sind mittels eines Halters (17) zwei Sensoren (18, 19) stationär angebracht. Die stationär angeordneten Sensoren (18, 19) liegen ab einem bestimmten Durchmesser der Oberfläche der Kreuzspule (11) gegenüber. Wie aus Fig. 2 zu ersehen ist, ändert sich dieser Abstand nur noch relativ geringfügig, wenn die Kreuzspule (11) beispielsweise den Durchmesser (20) erreicht hat.

Die Sensoren (18, 19), die in Umfangsrichtung der Kreuzspule (11) in einem festen Abstand (d_{Sensor}) angeordnet sind, erfassen Oberflächenunregelmäßigkeiten der Oberfläche der Kreuzspule (11) und bilden davon abhängige Signale. Beispielsweise sind die Sensoren (18, 19) optische Reflexionssensoren.

Die Sensorsignale werden einem Laufzeitkorrelator (21) zugeführt, der beispielsweise so ausgebildet ist, wie er in "Regelungstechnische Praxis, Jahrgang 1982, S. 73 bis 82 "Geschwindigkeits- und Durchflußmessung" mit Korrelationsverfahren" von F. Mesch beschrieben ist. Der Laufzeitkorrelator (21) bildet Laufzeiten (Δ_{T}) aus den statistisch schwankenden Sensorsignalen. Diese Laufzeiten (Δ_{T}) werden einem Divisionsglied (22) zugeführt, das mittels Division des Sensorabstandes (d_{Sensor}) durch die Laufzeiten ((Δ_{T}) die Umfangsgeschwindigkeiten (ν_{Spule}) der Oberfläche der Kreuzspule (11) bildet. Die Umfangsgeschwinsdigkeiten (ν_{Spule}) und die Winkelgeschwindigkeiten (ω_{Spule}) werden einem weiteren Divisionsglied (23) zugeführt, das die Umfangsgeschwindigkeiten (ν_{Spule}) durch die Winkelgeschwindigkeiten (ω_{Spule}) dividiert, und damit den momentanen Durchmesser oder den momentanen Radius (r_{Spule}) der Kreuzspule (11) errechnet.

Mit der erfindungsgemäßen Vorrichtung wird somit der Durchmesser oder der Radius (r_{Spule}) der Kreuzspule (11) - ab einem bestimmten Spulendurchmesser - laufend und sehr exakt ermittelt, wobei ausschließlich an der Kreuzspule (11) erfaßte Signale ausgewertet werden. Die Messung ist somit unabhängig davon, ob zwischen der Friktionswalze (12) und der Kreuzspule (11) Schlupf vorhanden ist oder nicht.

Der während der Herstellung der Kreuzspule (11) laufend ermittelte momentane Durchmesser oder Radius (r_{Spule}) der Kreuzspule (11) kann zum Eingriff in den Spulvorgang ausgewertet werden. Beispielsweise kann eine Regelung vorgesehen werden, mit der auf eine möglichst konstante Durchmesserzunahme pro Spulenumdrehung geregelt wird, um eine möglichst konstante Spulendichte zu erhalten. Hierzu wird ein Sollwert für die Durchmesserzunahme pro Spulenumdrehung vorgegeben, der mit den aus den ermittelten Durchmessern berechneten Durchmesserzunahme verglichen wird. Eine Einregelung der Durchmesserzunahme auf den Sollwert kann beispielsweise dadurch erfolgen, daß die Spannung verändert wird, mit der der Faden zu der Kreuzspule (11) läuft. Dies kann dadurch geschehen, daß die Umfangsgeschwindigkeit der Friktionswalze (12) entsprechend geändert wird und/oder ein der Friktionswalze vorgeschaltetes Fadenspannelement in seiner Wirkung verändert wird. Ebenso ist es möglich, die Belastung des Spulenrahmens (13) zu variieren, d.h. die Auflagekraft, mit der die Kreuzspule (11) auf der Friktionswalze (12) aufliegt.

## Patentansprüche

1. Verfahren zum Bestimmen des Durchmessers einer mittels einer Friktionswalze angetriebenen Kreuzspule während ihrer Herstellung, wobei die Winkelgeschwindigkeit der Kreuzspule mittels eines einem mit der Kreuzspule mitrotierenden Bauteils zugeordneten Gebers erfaßt und ausgewertet wird, wobei der Durchmesser der Kreuzspule mittels Division der Umfangsgeschwindigkeiten der Oberfläche der Kreuzspule durch die Winkelgeschwindigkeiten der Kreuzspule errechnet wird, und die Umfangsgeschwindigkeit aus Sensorsignalen von zwei in Umfangsrichtung der Kreuzspule in festem Abstand aufeinanderfolgenden, Oberflächenmerkmale der Kreuzspule erfassenden Sensoren mit einem Laufzeitkorrelationsverfahren errechnet wird.

2. Vorrichtung zum Bestimmen des Durchmessers einer mittels einer Friktionswalze (12) angetriebenen Kreuzspule (11) während ihrer Herstellung, wobei Mittel zum Erfassen und Auswerten der Winkelgeschwindigkeit (ω_{Spule}) eines mit der Kreuzspule mitrotierenden Bauteils vorgesehen sind, wobei dem Umfang der Kreuzspule (11) zwei in festem Abstand in Umfangsrichtung aufeinanderfolgende, Oberflächenmerkmale der Kreuzspule (11) erfassende Sensoren (18, 19) zugeordnet sind, und die Mittel zum Auswerten einen aus den Sensorsignalen Laufzeiten (Δ_{T}) bildenden Laufzeitkorrelator (21), ein aus dem festen Abstand (d_{Sensor}) der Sensoren (18, 19) und den Laufzeiten (Δ_{T}) durch Division die Umfangsgeschwindigkeiten (ν_{Spule}) bildendes Divisionsglied (22) und ein durch Division der Umfangsgeschwindigkeiten (ν_{Spule}) und der Winkelgeschwindigkeiten (ω_{Spule}) der Kreuzspule den Durchmesser errechnendes Divisionsglied (23) enthält.

3. Vorrichtung nach Anspruch 2, **dadurch gekennzeichnet, daß** die beiden Sensoren (18, 19) in der Nachbarschaft der Auflagestelle angeordnet sind, an der die Kreuzspule (11) auf der Friktionswalze (12) aufliegt.

4. Vorrichtung nach Anspruch 3, **dadurch gekennzeichnet, daß** die Sensoren (18, 19) auf der einem Spulrahmen (13) abgewandten Seite der Auflagestelle angeordnet sind.

5. Vorrichtung nach Anspruch 4, **dadurch gekennzeichnet, daß** die Sensoren (18, 19) stationär an einem der Friktionswalze (12) zugeordneten, stationären Abweisblech (16) angeordnet sind.

## Claims

1. Method for determining the diameter of a crosswound bobbin package driven by means of a friction roller, during production thereof, wherein the angular velocity of the crosswound bobbin package is detected by means of a sensor associated with a component co-rotating with the crosswound bobbin package and is evaluated, wherein the diameter of the crosswound bobbin package is calculated by dividing the circumferential velocities of the surface of the crosswound bobbin package by the angular velocities of the crosswound bobbin package, and the circumferential velocity is calculated from sensor signals from two sensors following one another at a fixed distance in the circumferential direction of the crosswound bobbin package and detecting surface features of the crosswound bobbin package, by a running time correlation method.

2. Device for determining the diameter of a crosswound bobbin package (11) driven, during production thereof, by means of a friction roller (12) wherein means for detecting and evaluating the angular velocity (ω_{bobbin}) of a component co-rotating with the crosswound bobbin package are provided, wherein two sensors (18, 19) following one another at a fixed distance in the circumferential direction and detecting surface features of the crosswound bobbin package (11) are associated with the circumference of the crosswound bobbin package (11), and the evaluation means contain a running time correlator (21) forming running times (Δ_{T}) from the sensor signals, a dividing element (22) forming the circumferential velocities (ν_{bobbin}) from the fixed distance (dₛₑₙₛₒᵣ) of the sensors (18, 19) and the running times (Δ_{T}) by division, and a dividing element (23) calculating the diameter by dividing the circumferential velocities (ν_{bobbin}) and the angular velocities (ω_{bobbin}) of the crosswound bobbin package.

3. Device according to claim 2, **characterised in that** the two sensors (18, 19) are arranged in the vicinity of the bearing point at which the crosswound bobbin package (11) rests on the friction roller (12).

4. Device according to claim 3, **characterised in that** the sensors (18, 19) are arranged on the side of the bearing point remote from the bobbin creel (13).

5. Device according to claim 4, **characterised in that** the sensors (18, 19) are arranged stationarily on a stationary deflection plate (16) associated with the friction roller (12).

## Revendications

1. Procédé pour déterminer le diamètre d'une bobine à spires croisées entraînée au moyen d'un cylindre à friction pendant la fabrication de celle-ci, la vitesse angulaire de la bobine à spires croisées étant relevée par un indicateur associé à un élément solidaire en rotation de la bobine à spires croisées, puis exploitée, sachant que le diamètre de la bobine à spires croisées est déterminé en divisant les vitesses périphériques de la surface de la bobine à spires croisées par les vitesses angulaires de la bobine à spires croisées et que la vitesse périphérique est calculée à partir des signaux émis par deux capteurs se succédant à intervalle fixe dans la direction du pourtour de la bobine à spires croisées et relevant des caractéristiques de surface de la bobine à spires croisées, à l'aide d'un procédé de corrélation avec la durée de fonctionnement.

2. Dispositif pour déterminer le diamètre d'une bobine à spires croisées (11) entraînée par un cylindre à friction (12) pendant la fabrication de celle-ci, des moyens étant prévus pour relever et exploiter la vitesse angulaire (ω_{Spule}) d'un élément solidaire en rotation de la bobine à spires croisées, sachant que deux capteurs (18, 19) se succédant à intervalle fixe dans la direction du pourtour de la bobine à spires croisées et relevant des caractéristiques de surface de la bobine à spires croisées (11) sont associés au pourtour de la bobine à spires croisées (11) et que les moyens pour exploiter comprennent un dispositif de corrélation avec la durée de bobinage (21) déterminant des durées de fonctionnement (Δ_{τ}) à partir des signaux fournis par les capteurs (18, 19), un élément diviseur (22) établissant les vitesses périphériques (ν_{Spule}) par division à partir de l'intervalle fixe (d_{Sensor}) entre les capteurs (18, 19) et des durées de fonctionnement (Δ_{τ}) et un élément diviseur (23) calculant le diamètre en divisant les vitesses périphériques (ν_{Spule}) par les vitesses angulaires (ω_{Spule}) de la bobine à spires croisées.

3. Dispositif selon la revendication 2, **caractérisé en ce que** les deux capteurs (18, 19) sont situés au voisinage de l'endroit où la bobine à spires croisées (11) repose sur le cylindre à friction (12).

4. Dispositif selon la revendication 3, **caractérisé en ce que** les capteurs (18, 19) sont placés sur le côté du point d'appui qui est opposé à un cantre à bobines (13).

5. Dispositif selon la revendication 4, **caractérisé en ce que** les capteurs (18, 19) sont placés fixement sur un déflecteur (16) fixe associé au cylindre à friction (12).
